# EUROPEAN PATENT APPLICATION

(11) **EP 2 597 846 A1**
(43) Date of publication of application: **29.05.2013**
(21) Application number: 11306537.9
(22) Date of filing: 22.11.2011
(51) Int. Cl.: H04M 1/725

(54) **A method for alerting a mobile device at a predetermined destination**

(71) Applicant: Alcatel Lucent, 75007 Paris (FR)
(72) Inventor: Ramachandran, Krishnamurthy, 600032 Chennai (IN)
(74) Representative: Sciaux, Edmond

(57) **Abstract**

The present invention relates to a method for creating an alert on a mobile device to trigger at a predetermined destination, said mobile device operating within a communication network via a plurality of wireless antennas. The method comprises steps consisting in:
- resolving a wireless antenna identification corresponding to said predetermined destination;
- monitoring said mobile device for connection by the mobile device to said wireless antenna identification;
- triggering an alarm on said mobile device upon connection to said cell site.

## Description

The present subject matter relates to a method for alerting a mobile device at a predetermined destination, in particular for transport applications.

### BACKGROUND

This section introduces aspects that may be helpful in facilitating a better understanding of the invention. Accordingly, the statements of this section are to be read in this light and are not to be understood as admissions about what is in the prior art or what is not in the prior art.

We know of notification systems calibrated to trigger at a particular time, or which are triggered manually by a user, using physical detection technology that is immobile, eg proximity sensors. Such a notification system can take the form of an audible, visual, or tactile alarm.

As such, to take a specific example, when one is to take a train to a destination, and one wishes to be notified of the impending arrival, one may program an alarm at a specific time corresponding to the scheduled arrival of the train. The alarm may produce an audible sound, a visual indication, or a sensed (such as vibration) motion.

However, this solution is not entirely satisfactory as one may arrive at destination ahead or behind the scheduled arrival time.

Others have tried to solved this problem by proposing a GPS-type solution which compares the current location to that of the destination. However, such solutions are not possible without sophisticated equipment.

An alternative is thus sought to better deal with this situation.

### BRIEF SUMMARY

Example embodiments provide a method for creating an alert on a mobile device to trigger at a predetermined destination, said mobile device operating within a communication network via a plurality of wireless antennas, said method comprising steps consisting in:
- resolving a wireless antenna identification corresponding to said predetermined destination;
- monitoring said mobile device for connection by the mobile device to said wireless antenna identification;
- triggering an alarm on said mobile device upon connection to said cell site.

Other embodiments provide a software program product adapted for alerting a mobile device when arriving at a predetermined destination, said software product being adapted to:
- receive a destination location request from a mobile device,
- interrogate a database for the corresponding wireless antenna identification of the predetermined destination
- monitoring a mobile device communication connections to detect when the mobile device connects to said resolved wireless antenna identification, and triggering an alarm on said mobile device upon connection to said antenna identification.

Yet further embodiments provide for a use of said method in an application consisting of a user of a rail transportation network setting an alert for a destination station

An advantage of these embodiments is that it provides a user a device-independent way of being alerted of arrival at a destination. Indeed, any portable device in communication with an appropriate communication network is adapted for working this method, without requiring the use of technologically advanced individual localization technology.

### BRIEF DESCRIPTION OF THE FIGURES

Some embodiments of devices and methods in accordance with embodiments of the present invention are now described, by way of example only, and with reference to the accompanying drawings, in which:
Figure 1 illustrates schematically a communication network according to a first embodiment;
Figure 2 illustrates a storage unit structure according to the first embodiment,
Figure 3 illustrates a call flow diagram for a communication network according to figure 1.
Figure 4 illustrates a variant of a call flow diagram for a communication network according to figure 1.

### DESCRIPTION OF EMBODIMENTS

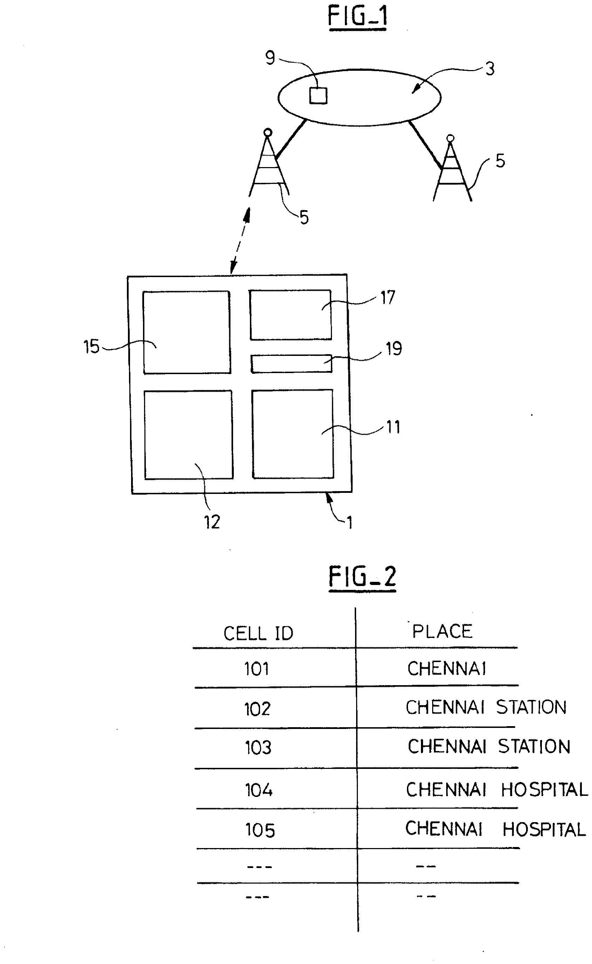

Figure 1 illustrates a mobile communication architecture according to a first embodiment, comprising:
- Mobile device or phone 1, commonly referred to as Mobile Station (MS), comprising a User Equipment and a Subscriber Identity Module (SIM) card;
- Mobile network 3, comprising wireless communication antenna 5, for example, BTS, Node-B, etc.; and

The Mobile network 3 comprises inter alia the equipment necessary for a communication network, as readily known to the skilled person.

The present embodiment makes reference to the GSM communication network standard, and as such the terms used hereafter will refer to this standard. However, the present invention is not limited to the GSM standard, and the teachings thereof apply equally to other wireless networks.

The communication antenna 5 comprises an antenna to be recognized by the mobile phone 1.

The mobile device 1 comprises an operating system space 11 configured to allow for normal mobile device operation and adapted to allow for user interaction via a user interface 12.

The mobile device further comprises a notification module 15 which is adapted to manage alarm locations as entered by the mobile user via the user interface 12. The notification module 15 is associated with a cell-information storage unit 17 and an alarm invocation module 19.

The cell-information storage unit 17 comprises cell-identification information for all the wireless antennas 5 in a given zone, along with corresponding geographic indications. An example storage unit 17 structure is given at Figure 2, for the city of Chennai, India.

A given cell-ID can have a plurality of geographic indications to take into account different venues, names, spellings of public places that users would refer to in the coverage of the antenna 5.

The cell-ID coverage area is used as a defacto geographic area equivalence.

A given cell-ID can correspond to many geographic indications. Also, a geographic location can correspond to more than one cell site, for example for parks or large buildings such as airports, etc.

The alarm invocation module 19 is adapted to draw the attention of the user, by ringing, vibrating, or flashing the mobile device 1.

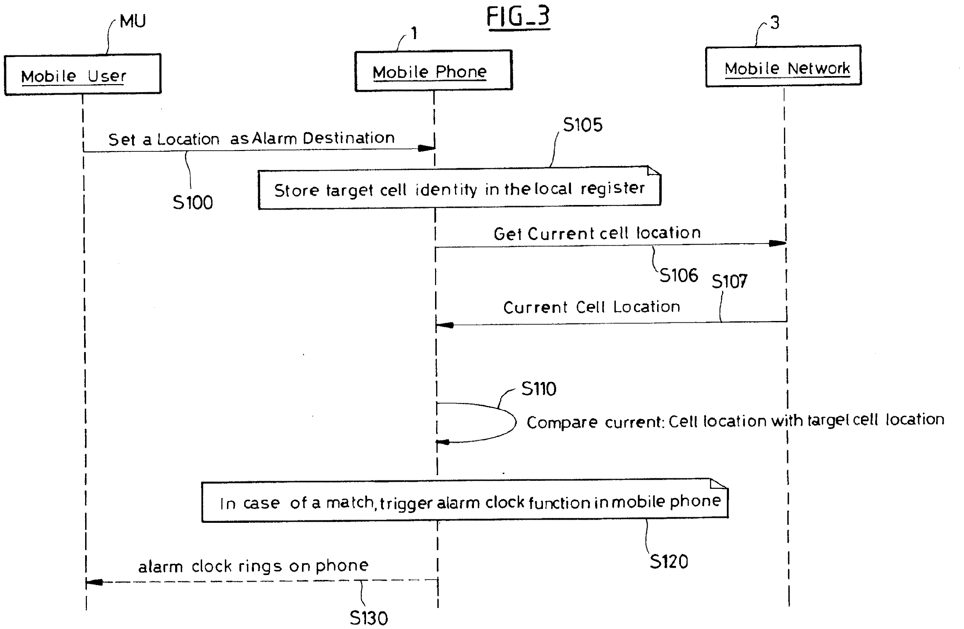

Referring to figure 3 illustrating schematically the operation of the above-described embodiment, the mobile user MU enters first configures the destination notification area (S100) via the notification module 15. Via the user interface 12, the mobile user MU enters the name of a geographic place where he wishes to be notified upon his arrival (S105). The notification module 15 then looks up the corresponding cell-ID on the cell-information storage unit 17 corresponding to geographic place set.

As such, the mobile device 1 is then able to continuously or regularly monitor the cell antenna ID 5 get current cell location 10) on which the mobile device 1 communicates. According to S106 and S107 the mobile phone 1 gets the current cell location from t mobile network 3. The monitoring may for example be handled by the notification module 15 monitoring the operating system space 11 for changes in antenna 5 connection use.

A monitoring attempt (S110) corresponds to a comparison between current cell location with target cell location 5. If the antenna 5 on which the mobile device 1 is connected to does not match the cell-ID 5 as set at step S100, then the monitoring (S110) continues. On the other hand, if the antenna 5 on which the mobile device 1 is connected to does match (S120) the cell-ID 5 as set at step S100, then the notification module 15 invokes the alarm invocation module 19 to alert the user that he has arrived within a zone covered by the cell antenna 5, which is proximate the selected geographic place (S130).

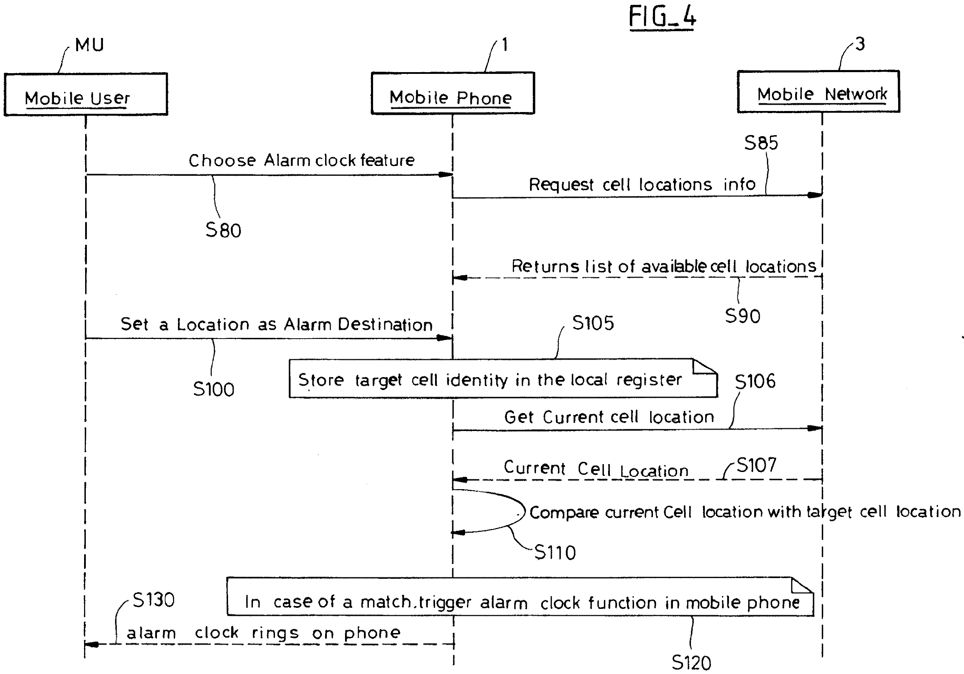

As a variant (figure 4), the configuration step S100 can be implemented by a step S80 in which the mobile user MU chooses an alarm clock feature via his mobile phone 1. According to step S85, the mobile phone 1 requests cell locations to the mobile network 3 and according to step S90 the mobile network returns to the mobile phone 3 the list of available cell locations.

A person of skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

## Claims

1. A method for creating an alert on a mobile device to trigger at a predetermined destination, said mobile device operating within a communication network via a plurality of wireless antennas, said method comprising steps consisting in:
- resolving a wireless antenna identification corresponding to said predetermined destination;
- monitoring said mobile device for connection by the mobile device to said wireless antenna identification;
- triggering an alarm on said mobile device upon connection to said cell site.

2. A method according to claim 1, wherein the step of resolving a wireless antenna identification comprises the step of sending the predetermined destination to an application server in said communication network,

3. A method according to claim 2, where the application server return the wireless antenna identification corresponding to the predetermined destination.

4. A software program product adapted for alerting a mobile device when arriving at a predetermined destination, said software product being adapted to:
- receive a destination location request from a mobile device,
- interrogate a database for the corresponding wireless antenna identification of the predetermined destination
- monitoring a mobile device communication connections to detect when the mobile device connects to said resolved wireless antenna identification, and triggering an alarm on said mobile device upon connection to said antenna identification.

5. Use of the method according to claims 1 to 4, in an application consisting of a user of a rail transportation network setting an alert for a destination station.
